# EUROPÄISCHE PATENTANMELDUNG

(11) **EP 1 142 899 A2**
(43) Veröffentlichungstag der Anmeldung: **10.10.2001**
(21) Anmeldenummer: 01107638.7
(22) Anmeldetag: 30.03.2001
(51) Int. Cl.: C07F 17/00, C07F 17/02, C08F 10/00

(54) **Polymerisationskatalysator**

(30) Priorität: 07.04.2000 DE 10017430
(71) Anmelder: BASF AKTIENGESELLSCHAFT, 67056 Ludwigshafen (DE)
(72) Erfinder: Kristen, Marc Oliver, Dr., 67117 Limburgerhof (DE); Bildstein, Benno, Prof. Dr., 6020 Innsbruck (AT); Malaun, Michael, Dr., 6473 Wenns (AT); Siemeling, Ulrich, Prof. Dr., 33613 Bielefeld (DE); Kuhnert, Oliver, 33611 Bielefeld (DE)

(57) **Zusammenfassung**

Metallorganische Verbindung der allgemeinen Formel I mit M¹ ausgewählt aus Fe, Ru, Os und M² ausgewählt aus den Übergangsmetallen der Gruppen IV bis VI des Periodensystems, 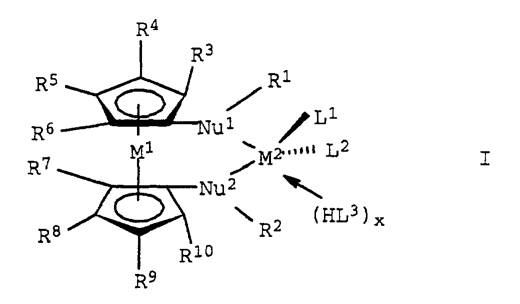 ein Verfahren zur Herstellung der erfindungsgemäßen Verbindung der allgemeinen Formel I durch Umsetzung einer metallorganische Verbindung der allgemeinen Formel II 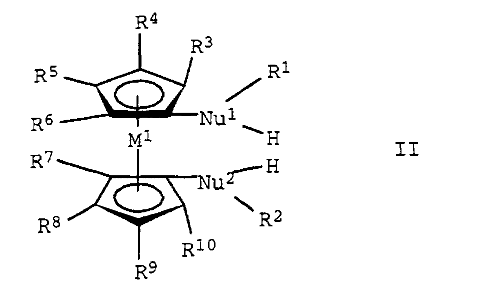 mit einer Übergangsmetallverbindung der allgemeinen Formel III,

M²L¹L² (L³)ₓ₊₁ III

wobei die Variablen wie oben wobei man die metallorganische Verbindung der Formel II optional vorher zweifach deprotoniert; weiterhin ein Katalysatorsystem zur Polymerisation oder Copolymerisation von Olefinen, enthaltend eine oder mehrere metallorganische Verbindungen der allgemeinen Formel I und mindestens einen Aktivator, sowie ein Verfahren zur Polymerisation oder Copolymerisation von Olefinen unter Verwendung des erfindungsgemäßen Katalysatorsystems. Weiterhin ein fester Katalysator, enthaltend eine metallorganische Verbindung der allgemeinen Formel I, mindestens einen Aktivator und einen festen Träger; schließlich ein Verfahren zur Herstellung des erfindungsgemäßen festen Katalysators durch Imprägnieren eines Trägermaterials mit einer oder mehreren metallorganischen Verbindung und mindestens einem Aktivator und ein Verfahren zur Polymerisation oder Copolymerisation von Olefinen in Masse, in Suspension oder in der Gasphase unter Verwendung des erfindungsgemäßen festen Katalysators.

## Beschreibung

Die vorliegende Erfindung betrifft eine metallorganische Verbindung der allgemeinen Formel I, 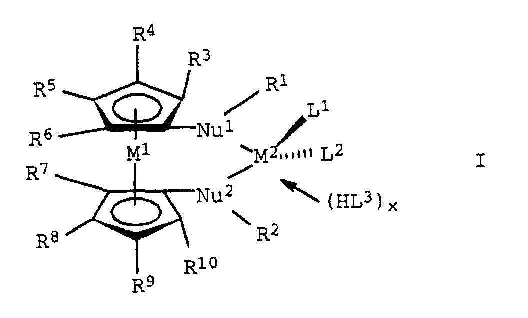 wobei die Variablen wie folgt definiert sind:
- M¹: ausgewählt aus Fe, Co, Ru oder Os,
- M²: ein Übergangsmetall der Gruppen 4, 5 oder 6 des Periodensystems der Elemente,
- Nu¹ und Nu²: gleich oder verschieden und ausgewählt aus N, P oder As,
- R¹ und R²: gleich oder verschieden und ausgewählt aus
C₁-C₈-Alkyl, substituiert oder unsubstituiert,
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
   C₁-C₈-Alkyl, substituiert oder unsubstituiert,
   C₃-C₁₂-Cycloalkyl,
   C₇-C₁₃-Aralkyl,
   C₆-C₁₄-Aryl,
   Halogen,
   C₁-C₆-Alkoxy,
   C₆-C₁₄-Aryloxy,
   SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
   C₁-C₈-Alkyl, substituiert oder unsubstituiert,
   C₃-C₁₂-Cycloalkyl,
   C₇-C₁₃-Aralkyl,
   C₆-C₁₄-Aryl,
   Halogen,
   C₁-C₆-Alkoxy,
   C₆-C₁₄-Aryloxy,
   SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
- R³ bis R¹⁰: Wasserstoff,
C₁-C₈-Alkyl, substituiert oder unsubstituiert,
C₃-C₁₂-Cycloalkyl, substituiert oder unsubstituiert,
NO₂,
Halogen,
C₇-C₁₃-Aralkyl,
C₆-C₁₄-Aryl, unsubstituiert oder einfach oder mehrfach gleich oder verschieden substituiert mit
   C₁-C₈-Alkyl, substituiert oder unsubstituiert,
   C₃-C₁₂-Cycloalkyl,
   C₇-C₁₃-Aralkyl,
   C₆-C₁₄-Aryl,
   Halogen,
   C₁-C₆-Alkoxy,
   C₆-C₁₄-Aryloxy,
   SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
   C₁-C₈-Alkyl, substituiert oder unsubstituiert,
   C₃-C₁₂-Cycloalkyl,
   C₇-C₁₃-Aralkyl,
   C₆-C₁₄-Aryl,
   Halogen,
   C₁-C₆-Alkoxy,
   C₆-C₁₄-Aryloxy,
   SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
wobei jeweils zwei benachbarte Reste R³ bis R⁶ oder R⁷ bis R¹⁰ zusammen mit den C-Atomen des Stammaromaten einen 5- bis 8-gliedrigen Ring bilden können
oder sterisch günstig stehende Reste eine Verbrückung der beiden C₅-Ringe bewirken können;
- L¹ bis L³: sind gleich oder verschieden und ausgewählt aus NR¹⁴R¹⁵, wobei R¹⁴ und R¹⁵ gleich oder verschieden sind und ausgewählt werden aus C₁-C₈-Alkyl, C₃-C₁₂-Cycloalkyl, C₂-C₈-Alkenyl mit einer oder mehreren konjugierten oder nicht-konjugierten Doppelbindungen, C₇-C₁₃-Aralkyl, C₆-C₁₄-Aryl, SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl; und wobei R¹⁴ und R¹⁵ miteinander unter Einbeziehung von N einen fünf- bis zehngliedrigen, gesättigten oder ungesättigten Ring bilden können, der seinerseits mit C₁-C₆-Alkyl substituiert sein kann,
C₁-C₈-Alkyl, substituiert oder unsubstituiert,
C₃-C₁₂-Cycloalkyl,
C₇-C₁₃-Aralkyl,
C₆-C₁₄-Aryl,
C₁-C₆-Alkoxy;
C₆-C₁₄-Aryloxy,
- x: eine ganze Zahl von 0 bis 3 ist.

Weiterhin betrifft die vorliegende Erfindung ein Verfahren zur Herstellung der erfindungsgemäßen Verbindung der allgemeinen Formel I, dadurch gekennzeichnet, dass man eine metallorganische Verbindung der allgemeinen Formel II mit einer Übergangsmetallverbindung der allgemeinen Formel III umsetzt,

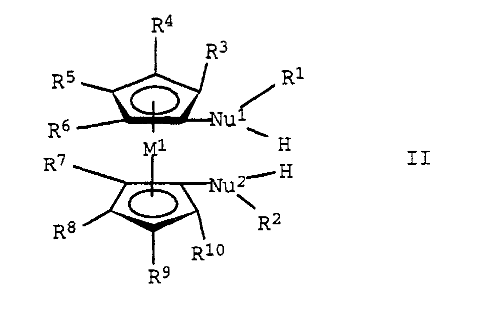

M²L¹L²(L³)ₓ₊₁ III

wobei die Variablen wie oben definiert sind, indem man die metallorganische Verbindung der Formel II optional vorher zweifach deprotoniert, sowie eine metallorganische Verbindung der allgemeinen Formel II.

Weiterhin betrifft die vorliegende Erfindung ein Verfahren zur Herstellung einer metallorganischen Verbindung II durch Umsetzung einer metallorganischen Verbindung der allgemeinen Formel IV 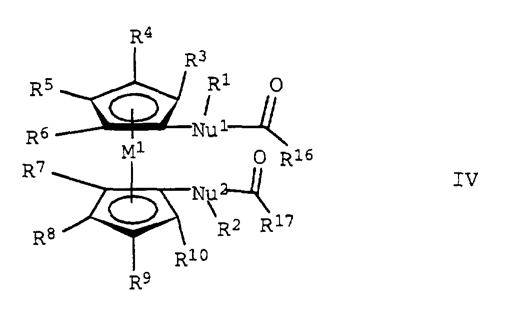 mit einer Hydroxidverbindung M³OH oder M⁴(OH)₂, wobei
- M³: Li, Na, K, Rb oder Cs und
- M⁴: Mg, Ca, Sr oder Ba bedeutet und

R¹⁶ und R¹⁷ unabhängig voneinander aus C₁-C₈-Alkyl, C₃-C₁₂-Cycloalkyl, C₇-C₁₃-Aralkyl oder C₆-C₁₄-Aryl ausgewählt werden und die übrigen Variablen wie oben definiert sind, sowie die metallorganische Verbindung der allgemeinen Formel IV.

Weiterhin betrifft die vorliegende Erfindung ein Verfahren zur Herstellung einer metallorganischen Verbindung der allgemeinen Formel IV durch Deprotonieren eines oder zweier Carbonsäurederivate R¹⁶-CO-Nu¹R¹H und R¹⁷-CO-Nu²R²H und anschließende Umsetzung mit einer metallorganischen Verbindung der allgemeinen Formel V 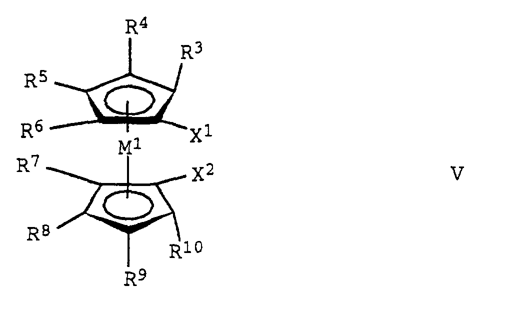 in Gegenwart einer Kupfer(I)-Verbindung und eines Cosolvens, wobei X¹ und X² unabhängig voneinander aus F, Cl oder Br gewählt werden und die übrigen Variablen wie oben definiert sind.

Weiterhin betrifft die vorliegende Erfindung ein Katalysatorsystem zur Polymerisation oder Copolymerisation von Olefinen, enthaltend eine oder mehrere metallorganische Verbindungen der allgemeinen Formel I und mindestens einen Aktivator, sowie ein Verfahren zur Polymerisation oder Copolymerisation von Olefinen unter Verwendung des erfindungsgemäßen Katalysatorsystems. Weiterhin betrifft die vorliegende Erfindung einen festen Katalysator, enthaltend eine metallorganische Verbindung der allgemeinen Formel I, mindestens einen Aktivator und einen festen Träger; schließlich betrifft die vorliegende Erfindung ein Verfahren zur Herstellung des erfindungsgemäßen festen Katalysators durch Imprägnieren eines Trägermaterials mit einer oder mehreren metallorganischen Verbindung und mindestens einem Aktivator und ein Verfahren zur Polymerisation oder Copolymerisation von Olefinen in Masse, in Suspension oder in der Gasphase unter Verwendung des erfindungsgemäßen festen Katalysators.

Polymere und Copolymere von Olefinen sind wirtschaftlich von großer Bedeutung, weil die Monomere in großen Mengen leicht zugänglich sind und weil sich die Polymere durch Variation des Herstellverfahrens oder der Verarbeitungsparameter in weiten Bereichen variieren lassen. Besondere Aufmerksamkeit beim Herstellverfahren gilt dabei dem verwendeten Katalysator. Neben Ziegler-Natta-Katalysatoren sind verschiedenartige Single-Site-Katalysatoren von wachsender Bedeutung, wobei als Zentralatome neben Zr wie beispielsweise in Metallocenkatalysatoren (H.-H. Brintzinger et al., Angew. Chem. *1995*, 107, 1255) auch Ni oder Pd (WO 96/23010) oder Fe und Co (z.B. WO 98/27124) in jüngster Zeit genauer untersucht worden sind.

Bei der Synthese von katalytisch aktiven Metallocenen für die Polymerisation von Propylen gibt es das Problem, dass die meisten Metallocene üblicherweise als Gemisch der erwünschten Racemat-Form und der unerwünschten meso-Form anfallen. Vorschläge zur Abhilfe sind aus der Literatur bekannt. So wird vorgeschlagen, Racemat-Form und meso-Form voneinander zu trennen (beispielsweise durch alkoholytische Zersetzung des meso-Isomers in DE-A 195 47 247, durch Komplexierung mit Tetramethylethylendiamin "TMEDA" in EP-A 0 854 876 und Kristallisation, durch Umwandlung in einem separaten Schritt in EP-A 0 837 865) oder aber durch spezielle Reaktionsbedingungen unter Verwendung teurer Reagenzien wie in EP-A 0 891 980 (Organostannylreagenzien). Alle vorgenannten Methoden erfordern zusätzliche Verfahrensschritte und sind deshalb aufwendig und unvorteilhaft.

Die Verwendung von Amidokomplexen wie in EP-A 0 763 044 ist auf wenige für die großtechnische Polymerisation nicht relevante Metallocene beschränkt.

Bis-Amidliganden für 4-wertige Metalle der Gruppen IV bis VI des Periodensystems sind bei der Suche nach neuen katalytisch aktiven Substanzen von besonderem Interesse (G.J.P. Britovsek et al., Angew. Chem. 1999, 111, 448). Ihre Eigenschaften bei der Polymerisation lassen sich in weiten Bereichen steuern (siehe beispielsweise N.A.H. Male et al., J. Chem. Commun., Dalton Trans. 1997, 2487; H. Mack et al., J. Organomet. Chem. 1996, 525, 81; C. Averbuj *et al.*, *J. Am*. *Chem. Soc.* 1998, *120,* 8640; V.C. Gibson et al., J. Chem. Soc., Chem. Commun. 1998, 313). Attraktiv ist im Hinblick auf die Polymerisation von Propylen, dass sie bei der Synthese automatisch als Racemat anfallen und eine Abtrennung eines eventuell anfallenden meso-Isomers nicht erforderlich ist. Andererseits lassen sich die elektronischen Verhältnisse am katalytisch aktiven Zentrum der Bis-Amid-Komplexe nur ungenügend steuern, weil die einführbaren Substituenten der bisher bekannten Bis-Amid-Komplexe weit vom katalytisch aktiven Zentrum entfernt sind.

Besonders erwünscht sind jedoch Komplexe mit gezielt steuerbaren sterischen und elektronischen Einflüssen des Liganden auf das katalytisch aktive Zentrum.

Spannenberg et al. (Z. anorg. allg. Chem. 1997, 623, 389) haben Ferrocen-haltige Liganden und deren Titan-Komplexe der allgemeinen Formel B publiziert, 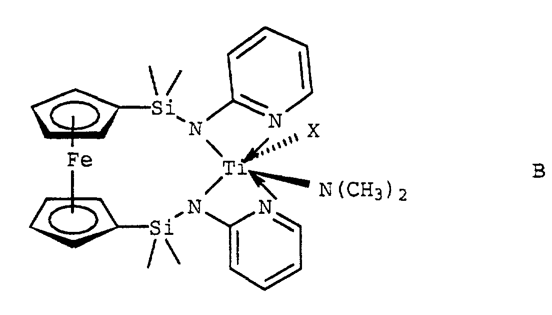 bei denen X für Cl oder N(CH₃)₂ steht.

Komplexe der Formel A sind jedoch instabil und zersetzen sich bereits partiell beim Erwärmen in Hexan. Über ihre Aktivität als Polymerisationskatalysatoren ist nichts bekannt. Als Polymerisationskatalysatoren sind sie deshalb zu empfindlich, denn die meisten gängigen Verfahren arbeiten bei Temperaturen von 60 bis 100°C.

Es bestand daher die Aufgabe,
- neue Komplexe mit hinreichender thermischer Stabilität einerseits und gezielt steuerbaren sterischen und elektronischen Einflüssen des Liganden auf das katalytisch aktive Zentrum andererseits bereitzustellen,
- Katalysatorsysteme zur Polymerisation oder Copolymerisation von Olefinen aus den neuen Komplexen und geeigneten Aktivatoren bereitzustellen,
- ein Verfahren zur Polymerisation oder Copolymerisation von Olefinen unter Verwendung der aufgabengemäßen Katalysatorsysteme bereitzustellen,
- ein Verfahren zur Herstellung der aufgabengemäßen Komplexe bereitzustellen,
- einen festen Katalysator, der geeignet für die Gasphasenpolymerisation, die Suspensions-Polymerisation oder die Massepolymerisation ist, bereitzustellen, enthaltend eine aufgabengemäße Komplexverbindung, einen geeigneten Aktivator sowie einen festen Träger,
- ein Verfahren zur Herstellung eines festen Katalysators aus den neuen Komplexen bereitzustellen sowie
- ein Verfahren zur Polymerisation oder Copolymerisation von Olefinen unter Verwendung des aufgabengemäßen festen Katalysators bereitzustellen.

Demgemäß wurden die eingangs definierten metallorganischen Verbindungen gefunden.

In Formel I sind
- M¹: Fe, Co, Ru oder Os, bevorzugt Fe;
- M²: ein Übergangsmetall der Gruppen IV, V oder VI des Periodensystems der Elemente, bevorzugt Ti, Zr, Hf, Cr oder V, besonders bevorzugt Ti oder Zr;

Nu¹ und Nu² gleich oder verschieden und ausgewählt aus N, P oder As, bevorzugt sind Nu¹ und Nu² gleich und ausgewählt aus N oder P, besonders bevorzugt sind Nu¹ und Nu² gleich N;

R¹ und R² sind gleich oder verschieden und ausgewählt aus
- C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thio-methylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenylbutyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-*para*-xylylsilyloxygruppe; besonders bevorzugt sind die Trimethylsilyloxygruppe und die tert.-Butyldimethylsilyloxygruppe;
   - Ganz besonders bevorzugt sind 2,6-Dimethylphenyl, 2,6-Diisopropylphenyl, Mesityl und 2,6-Dichlorphenyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy;
   - Silylgruppen SiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-para-xylylsilyloxygruppe; besonders bevorzugt sind die Trimethylsilyloxygruppe und die tert.-Butyldimethylsilyloxygruppe;
   - ganz besonders bevorzugt sind 2,5-Methyl-N-pyrrolyl, 2,5-Diisopropyl-N-pyrrolyl und N-Carbazolyl.

In einer besonders bevorzugten Ausführungsform sind R¹ und R² gleich und ausgewählt aus einfach oder mehrfach gleich oder verschieden substituiertem C₆-C₁₄-Aryl oder fünf- bis sechsgliedrigen stickstoffhaltigen Heteroarylresten.

R³ bis R¹⁰ sind gleich oder verschieden und ausgewählt aus
- Wasserstoff,
- C₁-C₈-Alkylgruppen, wie Methyl, Ethyl, n-Propyl, iso-Propyl, n-Butyl, iso-Butyl, sec.-Butyl, tert.-Butyl, n-Pentyl, isoPentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt: 2-Methylcyclopentyl, 3-Methylcyclopentyl, cis-2,4-Dimethylcyclopentyl, trans-2, 4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thio-methylcyclopentyl, 3-Thiomethylcyclohexyl und weitere Derivate;
- NO₂,
- Halogen, ausgewählt aus Fluor, Chlor, Brom und Iod, bevorzugt Fluor oder Chlor,
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenylbutyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - Ganz besonders bevorzugt sind 2,6-Dimethylphenyl, 2,6-Diisopropylphenyl, Mesityl und 2,6-Dichlorphenyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy;
   - Silylgruppen SiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - ganz besonders bevorzugt sind 2,5-Methyl-*N*-pyrrolyl, 2,5-Diisopropyl-N-pyrrolyl und N-Carbazolyl.

L¹ bis L³ sind gleich oder verschieden und ausgewählt aus
- NR¹⁴R¹⁵, wobei R¹⁴ und R¹⁵ gleich oder verschieden sind und ausgewählt werden aus
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₂-C₈-Alkenyl mit einer oder mehreren konjugierten oder nicht-konjugierten Doppelbindung, wie beispielsweise Vinyl, Allyl, But-2-en-1-yl, But-4-en-1-yl, But-4-en-2-yl, 1,3-Butadienyl, Pent-2-en-1-yl, 2,2-Dimethyl-pent-1-en-1-yl, 1,3-Pentadienyl, ω-Hexenyl oder ω-Octenyl; bevorzugt sind Vinyl, Allyl und 1,3-Butadienyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Silylgruppen SiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR¹¹R¹²R¹³, wobei R¹¹ bis R¹³ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - Halogenid wie beispielsweise Fluorid, Chlorid, Bromid oder Iodid, bevorzugt sind Fluorid und Chlorid;
   - C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (l-Methyl-1-phenylethyl), 1-Phenylbutyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, bevorzugt Methoxy, Ethoxy, n-Propoxy und n-Butoxy;
- C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy, bevorzugt Phenoxy.

x ist eine ganze Zahl von 0 bis 3.

Wenn L³ aus C₁-C₈-Alkyl, C₃-C₁₂-Cycloalkyl, C₇-C₁₃-Aralkyl oder C₆-C₁₄-Aryl gewählt wird, so ist x vorzugsweise 0.

Dabei können sterisch günstig stehende Reste eine Verbrückung der beiden C₅-Ringe bewirken, beispielsweise können R⁵ und R⁷ zusammen sein: Dimethylsilyl, Diphenylsilyl, Tetramethyldisilyl, C1-C4-Alkyliden, das beispielsweise substituiert sein kann mit Methyl oder Phenyl, wie Methyliden, 2,2-Isopropyliden, Diphenylmethylen, Ethyliden, Tetramethylen -(CH₂)₄- oder Tetramethylethyliden.

Weiterhin können jeweils zwei benachbarte Reste R³ bis R⁶ oder R⁷ bis R¹⁰ zusammen mit den C-Atomen des Stammaromaten einen 5- bis 8-gliedrigen Ring bilden, der optional weitere Substituenten Z tragen kann. Beispielsweise können R⁴ und R⁵ zusammen sein: -(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CHMe-O-, -CH-(C₆H₅)-O-, -O-CH₂-CH₂-O-, -O-C(CH₃)₂-O-, -NCH₃-CH₂-CH₂-NCH₃-, -NCH₃-CH₂-NCH₃- oder -O-Si(CH₃)₂-O-.

Z wird ausgewählt aus
- C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Ganz besonders bevorzugtes Beispiel für Verbindungen der allgemeinen Formel I ist die Verbindung der Formel I a.

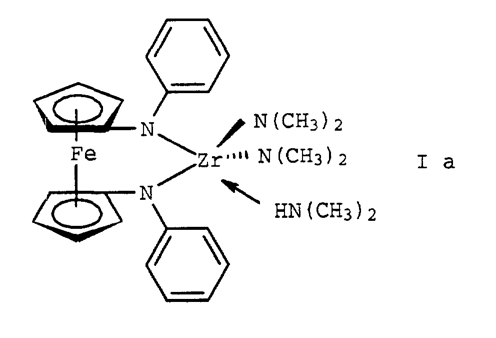

Die Darstellung der erfindungsgemäßen metallorganischen Verbindung der allgemeinen Formel I erfolgt vorteilhaft durch eine mehrstufige Reaktionssequenz, an deren Abschluss die Umsetzung der ebenfalls erfindungsgemäßen metallorganischen Verbindung der allgemeinen Formel II mit einer Übergangsmetallverbindung III steht.

Ausgangspunkt der mehrstufigen Reaktionssequenz sind 1,1'-Dihalogenmetallocenverbindungen der allgemeinen Formel V, die aus ihren nicht-halogenierten Derivaten nach R.F. Kovar, M.D. Rausch, H. Rosenberg; Organomet. Chem. Syn. 1970/1971, 1, 173-181 durch Halogenierung der dilithiierten Ferrocene mit Halogenen, Toluolsulfonylhalogeniden oder perhalogenierten Kohlenwasserstoffen darstellbar sind.

Die Darstellung der erfindungsgemäßen metallorganischen Verbindung der allgemeinen Formel II erfolgt vorteilhaft durch die folgende Reaktionssequenz:

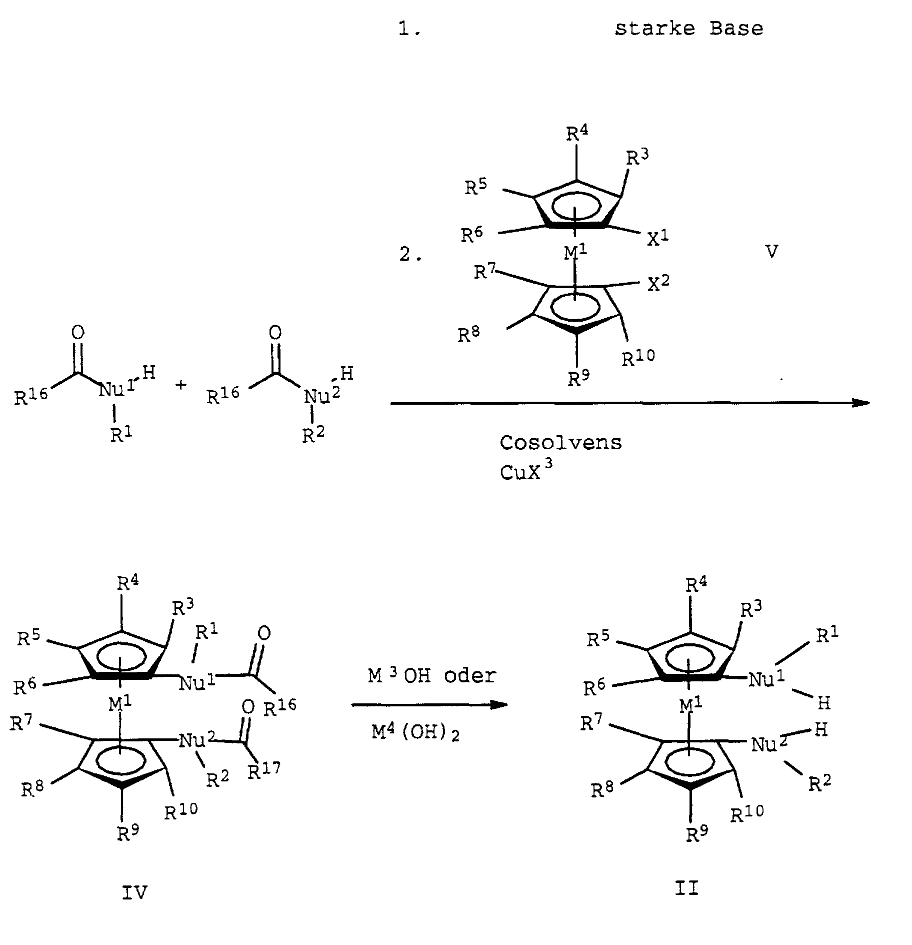

Im ersten Schritt werden in Anlehnung an eine Vorschrift von Herberhold et al., J. Organomet. Chem. 1983, 241, 227 die beiden Halogenidionen (X¹) - und (X²) - gegen deprotonierte Carbonylsäurederivate R¹⁶CONu¹HR¹ und R¹⁷CONu²HR² substituiert.

Für den stark bevorzugten Fall, dass Nu¹ und Nu² gleich und R¹ und R² gleich gewählt werden, werden im ersten Schritt der obigen Sequenz zwei Äquivalente R¹⁶CONu¹HR¹ anstatt je eines Äquivalents R¹⁶CONu¹HR¹ und R¹⁷CONu²HR² eingesetzt.

Es ist für den Fachmann ersichtlich, dass für den Fall, dass Nu¹ und Nu² ungleich oder R¹ und R² ungleich gewählt werden sollen, im Allgemeinen schwer auftrennbare Produktgemische entstehen; darum ist die Wahl verschiedener Nu¹ und Nu² bzw. und R¹ und R² nicht die bevorzugte Ausführungsform.

X¹ bis X³ können gleich oder verschieden sein und werden aus Fluor, Chlor, Brom und Iod gewählt, wobei Fluor, Chlor und Brom bevorzugt, Chlor und Brom besonders bevorzugt sind. Besonders bevorzugt sind X¹ und X² gleich.

Die Reste R¹⁶ und R¹⁷ werden ausgewählt aus
- C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₂-Alkyl wie Methyl oder Ethyl und ganz besonders bevorzugt Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenylbutyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

R¹⁶ und R¹⁷ können gleich oder verschieden sein, bevorzugt sind sie gleich.

Im ersten Schritt der Reaktionssequenz wird das beziehungsweise die Carbonsäurederivate durch eine starke Base deprotoniert. Als starke Base ist beispielsweise geeignet: Lithiumamid, Natriumamid, Kaliumamid, Kaliumhydrid oder Lithiumdiisopropylamid ("LDA"). Als Lösemittel haben sich hochsiedende Lösemittel wie Toluol, ortho-Xylol, meta-Xylol, para-Xylol, Ethylbenzol oder Mischungen derselben als geeignet erwiesen.

Diese Reaktion ist im Allgemeinen nach einigen Stunden beendet, sinnvoll ist eine Reaktionsdauer von 2 bis 10 Stunden, bevorzugt sind 3 bis 5 Stunden. Die Reaktionstemperaturen sind im Allgemeinen unkritisch, eine Temperatur von über 100°C hat sich als bevorzugt erwiesen.

Als Cosolvens können Verbindungen dienen, die als Neutralliganden in der Komplexchemie bekannt sind, beispielsweise Pyridin, Lutidin, Collidin, Dimethylsulfid oder Triphenylphosphan, bevorzugt ist Pyridin. Als Lösemittel haben sich hochsiedende Lösemittel wie Toluol, ortho-Xylol, meta-Xylol, para-Xylol, Ethylbenzol oder Mischungen derselben als geeignet erwiesen.

Als Katalysator für diese Reaktion dienen Salze des einwertigen Kupfers, bevorzugt CuCl oder CuBr, wobei sich 5 mol-% bis 150 mol-%, bezogen auf das beziehungsweise die Carbonsäurederivate, als zweckmäßig erwiesen haben.

Diese Reaktion gelingt durch mehrstündiges Erhitzen. Als geeignet hat sich ein Zeitraum von 2 bis 100 Stunden erwiesen, bevorzugt 5 bis 96 Stunden und besonders bevorzugt 48 bis 75 Stunden. Die Reaktionstemperaturen sind in diesem Falle wichtig, eine Temperatur von über 100°C hat sich als bevorzugt erwiesen, ein Kochen am Rückfluss ist besonders bevorzugt. Kürzere Reaktionsdauer oder niedrigere Temperaturen führen meist, aber nicht immer zu unvollständiger Umsetzung.

Im Anschluss an diesen Schritt erfolgt zweckmäßig eine Reinigung des Produkts durch Kristallisation oder Chromatographie. Auch eine extraktive Entfernung von Verunreinigungen hat sich als zweckmäßige Aufarbeitung erwiesen.

Die Abspaltung der Carbonylgruppen kann unter verschiedenartigen Reaktionsbedingungen erfolgen. So sind beispielhaft zu nennen: Verseifung unter alkalischen Bedingungen mit M³OH oder M⁴(OH)₂ oder saure Hydrolyse in Gegenwart katalytischer Mengen von beispielsweise Schwefelsäure oder Phosphorsäure.

Dabei ist
- M³: ausgewählt aus Li, Na, K, Rb oder Cs, bevorzugt Na oder K;
- M⁴: ausgewählt aus Mg, Ca, Sr oder Ba, bevorzugt ist Ca.

Bevorzugt ist die Verseifung unter alkalischen Bedingungen. Die Reaktion wird zweckmäßig mit einem Überschuss an Hydroxid M³OH oder M⁴(OH)₂ in einem höher siedenden Alkohol durchgeführt, beispielsweise Ethanol, n-Propanol, n-Butanol, Glykol oder Propan-1,3-diol. Der Alkohol kann optional mit 0,1 bis 50 Vol.-% Wasser gemischt werden. Der Überschuss an Hydroxid beträgt zwischen 10 mol-% und 100000 mol-%. Meist ist mehrstündiges Erhitzen erforderlich in einem Zeitraum von 2 bis 48 Stunden, bevorzugt 8 bis 24 Stunden.

Die metallorganische Verbindung der allgemeinen Formel II muss nach der Umsetzung im Allgemeinen noch gereinigt werden, was durch Chromatographie, Kristallisation, Extraktion oder andere typische Arbeitsschritte der organischen Synthese erfolgt. Besonders wichtig ist die Entfernung von Feuchtigkeit sowie Spuren von Hydroxiden aus dem Produkt.

Die Darstellung der erfindungsgemäßen metallorganischen Verbindungen der allgemeinen Formel I erfolgt durch Umsetzung einer metallorganischen Verbindung der allgemeinen Formel II mit einer Übergangsmetallverbindung der allgemeinen Formel III, wobei die Variablen in den Formeln II und III wie oben definiert sind. Die Bedingungen für die Umsetzung sind an sich unkritisch; üblicherweise mischt man II und III miteinander in einem geeigneten Lösemittel wie Benzol, Toluol, Ethylbenzol, ortho-Xylol, meta-Xylol oder para-Xylol, Chlorbenzol, Cyclohexan, Methylenchlorid oder einem Gemisch derselben. Als Temperaturbereich kommen -100°C bis +150°C in Frage, bevorzugt -78°C bis +100°C. Dabei sollte die Reaktionstemperatur den Schmelzpunkt des Lösemittels nicht unterschreiten; auch lassen sich Temperaturen oberhalb des Siedepunkts des betreffenden Lösemittels nur in Autoklavenversuchen verwirklichen und sind weniger bevorzugt. Wichtig ist jedoch, dass man die Umsetzung unter Ausschluss von Sauerstoff und Feuchtigkeit durchführt.

Als Molverhältnisse II:III sind solche im Bereich von 5:1 bis 1:5 geeignet. Da jedoch die Übergangsmetallverbindungen der allgemeinen Formel II die aufwändiger zugänglichen Reaktionspartner sind, sind Molverhältnisse II:III im Bereich von 1:1 bis 1:3 bevorzugt, besonders bevorzugt sind stöchiometrische Mengen.

Die Reinigung der erfindungsgemäßen metallorganischen Verbindungen der allgemeinen Formel I gelingt durch die in der metallorganischen Chemie üblichen Methoden, wobei die Kristallisation besonders bevorzugt ist, weiterhin sind Filtrationen über Filterhilfsmittel wie beispielsweise Celite® geeignet.

Die Darstellung von Übergangsmetallverbindungen der allgemeinen Formel III ist exemplarisch bei G.M. Diamond et al., Organometallics 1996, 15, 4030 beschrieben.

Metallorganische Verbindungen der allgemeinen Formel I lassen sich leicht oxidieren, wenn M¹ aus Fe oder Co gewählt werden. Als Oxidationsmittel haben sich HNO₃ und C₁-C₈-Alkylhalogenide bewährt sowie elektrochemische Methoden. Weitere bewährte Beispiele sind NOBF₄ oder geeignete Ferroceniumsalze oder Silber(I)-salze wie beispielsweise AgNO₃, AgBF₄ oder Ag₂C₂O₄ (Silberoxalat). Durch Oxidation oder auch partielle Oxidation, d.h. nicht stöchiometrische Oxidation, lässt sich die Elektronendichte am katalytisch aktiven Zentralatom M² fein steuern. Wenn bei der Verwendung von metallorganischen Verbindungen der allgemeinen Formel I in der Katalyse die Rede ist, so sind auch die ganz oder partiell oxidierten Derivate umfasst.

Partiell oxidierte Derivate sind zur Darstellung von Polymeren mit bimodaler Molgewichtsverteilung geeignet.

Damit die metallorganischen Verbindungen der allgemeinen Formel I polymerisationsaktiv sind, müssen sie mit einem Cokatalysator aktiviert werden. Geeignete Cokatalysatoren sind Aluminiumalkyle der allgemeinen Formel AlR₃, Lithiumalkyle der allgemeinen Formel LiR sowie Alumoxane, wobei Alumoxane besonders bevorzugt sind.

Dabei sind die Reste R gleich oder verschieden und C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neoPentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.

Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs VI a und VI b.

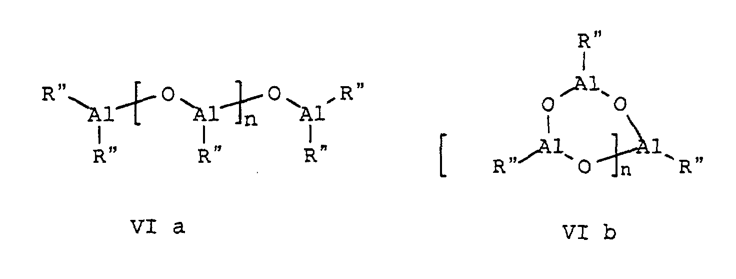

In Formel VI a und VI b sind die Reste R" gleich oder verschieden und unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenylpropyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und

- n: ist eine ganze Zahl von 0 bis 40, bevorzugt von 0 bis 25 und besonders bevorzugt von 0 bis 22.

In der Literatur werden auch käfigartige Strukturen für Aluminoxane diskutiert (Y. Koide, S.G. Bott, A.R. Barron Organometallics 1996, *15*, 2213-26; A.R. Barron Macromol. Symp. 1995, 97, 15). Unabhängig davon, wie die Struktur der Aluminoxane tatsächlich aussieht, sind sie als Putzalkyle und als Cokatalysatoren für die erfindungsgemäßen metallorganischen Verbindungen der allgemeinen Formel I geeignet.

Um die erfindungsgemäßen metallorganischen Verbindungen der allgemeinen Formel I mit Aluminoxanen zu aktivieren, ist im Allgemeinen ein Überschuss von Aluminoxan, bezogen auf M, notwendig. Sinnvolle Molverhältnisse M : Al liegen im Bereich von 1 : 10 bis 1 : 10.000, bevorzugt 1 : 50 bis 1 : 1000 und besonders bevorzugt 1 : 100 bis 1 : 500.

Eine andere Klasse geeigneter Cokatalysatoren sind starke Lewis-Säuren sowie Salze sterisch anspruchsvoll substituierter nicht oder nur schwach koordinierender Anionen. Geeignete Lewis-Säuren und Salze sind ausgewählte Bor-Verbindungen mit elektronenziehenden Resten (z.B. Trispentafluorphenylboran, *N*,*N*-Dimethylanilinium-tetrakis-pentafluorphenylborat, Tri-n-butylammoniumtetrakis-pentafluorphenylborat, *N,N-*Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat). Diese Aktivatoren sind in EP-A 0 468 537 sowie EP-A 0 426 638 offengelegt. Bevorzugt sind Dimethylanilinium-tetrakis-pentafluorphenylborat, Tritylium-tetrakispentafluorphenylborat sowie Trispentafluorphenylboran (X. Yang *et al*., *J. Am. Chem. Soc.* 1991, *113,* 3623). Diese Aktivatoren werden üblicherweise gemeinsam mit einer Aluminiumalkylverbindung zur Aktivierung der erfindungsgemäßen metallorganischen Verbindung der allgemeinen Formel I eingesetzt.

Verwendet man Bor- oder Aluminiumverbindungen als Aktivatoren für die erfindungsgemäßen metallorganischen Verbindungen der allgemeinen Formel I, so setzt man sie im Allgemeinen in einem molaren Verhältnis von 1 : 10 bis 10 : 1, bezogen auf M, ein; bevorzugt 1 : 2 bis 5 : 1 und besonders bevorzugt 1 : 2 bis 2 : 1 und ganz besonders bevorzugt 1 : 1.

Es können auch Gemische aus zwei oder mehr Aluminiumalkyen oder Lithiumalkylen als Cokatalysator und Putzalkyl verwendet werden. Auch Gemische aus Aluminiumalkylen mit Lithiumalkylen sind geeignet.

Druck- und Temperaturbedingungen während der Polymerisation können in weiten Grenzen gewählt werden. Als Druck hat sich ein Bereich von 0,5 bar bis 4000 bar als geeignet erwiesen, bevorzugt sind 10 bis 75 bar oder Hochdruckbedingungen von 500 bis 2500 bar. Als Temperatur hat sich ein Bereich von 0 bis 120°C als geeignet erwiesen, bevorzugt sind 40 bis 100°C und besonders bevorzugt 50 bis 85°C.

Als Monomer sind die folgenden Olefine geeignet: Ethylen, Propylen, 1-Buten, 1-Penten, 1-Hexen, 1-Octen, 1-Decen oder 1-Undecen, wobei Ethylen besonders bevorzugt ist.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere.

Als Lösemittel haben sich Toluol, ortho-Xylol, meta-Xylol, para-Xylol oder Ethylbenzol als geeignet erwiesen sowie Mischungen derselben, weiterhin - bei Hochdruckbedingungen - überkritisches Ethylen.

Wenn sich der Einsatz von Aluminiumalkyl oder Lithiumalkyl als Putzalkyl erforderlich erweist, so ist es von Vorteil, das Aluminiumalkyl oder Lithiumalkyl als Lösung in einem Kohlenwasserstoff getrennt vom Katalysatorsystem zu dosieren. Es ist jedoch auch möglich, das Putzalkyl zusammen mit der erfindungsgemäßen metallorganischen Verbindung I zu dosieren.

Das erfindungsgemäße Katalysatorsystem hat sich weiterhin als Wasserstoff-regelbar erwiesen, d.h. durch Zugabe von Wasserstoff lässt sich das Molekulargewicht der durch das erfindungsgemäße Katalysatorsystem erhältlichen Polymere senken. Bei genügend Wasserstoffzugabe werden Wachse erhalten, wobei die erforderliche Wasserstoffkonzentration auch von der Art der verwendeten Polymerisationsanlage abhängt.

Die erfindungsgemäßen metallorganischen Verbindungen der allgemeinen Formel I lassen sich auch gemeinsam mit Metallocenen zur Katalyse der Olefinpolymerisation verwenden. Dazu können sie gemeinsam oder getrennt von den Metallocenen aktiviert und auch gemeinsam oder separat dosiert werden.

Damit die metallorganischen Verbindungen der allgemeinen Formel I in modernen Polymerisationsverfahren wie Suspensionsverfahren, Massepolymerisationsverfahren oder Gasphasenverfahren eingesetzt werden können, ist es notwendig, sie auf einem festen Träger zu immobilisieren. Andernfalls kann es zu Morphologieproblemen des Polymers (Brocken, Wandbeläge, Verstopfungen in Leitungen oder Wärmetauschern) kommen, die zum Abschalten der Anlage zwingen. Eine solche immobilisierte metallorganische Verbindung der allgemeinen Formel I wird als Katalysator bezeichnet.

Es wurde gefunden, dass sich metallorganische Verbindungen der allgemeinen Formel I gut auf einem festen Träger abscheiden lassen. Als Trägermaterialien kommen z.B. poröse Metalloxide von Metallen der Gruppen 2-14 oder Mischungen derselben in Frage, weiterhin Schichtsilikate und Zeolithe. Bevorzugte Beispiele für Metalloxide der Gruppen 2-14 sind SiO₂, B₂O₃, Al₂O₃, MgO, CaO und ZnO. Bevorzugte Schichtsilikate sind Montmorrilonite oder Bentonite; als bevorzugter Zeolith wird MCM-41 eingesetzt.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel SG 332, Sylopol® 948 oder 952 oder S 2101 der Fa. W.R. Grace oder ES 70X der Fa. Crosfield.

Als Partikelgröße des Trägermaterials haben sich mittlere Teilchendurchmesser von 1 bis 300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet. Dieses Ausheizen sollte über einen Zeitraum von 0,5 bis 24 Stunden erfolgen, wobei Ausheizzeiten von 1 bis 12 Stunden bevorzugt sind. Die Druckbedingungen sind vom gewählten Verfahren abhängig; das Ausheizen kann in einem Festbettverfahren, einem gerührten Kessel oder aber in einem Fließbettverfahren erfolgen. Ganz allgemein kann das Ausheizen kann bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Für Fließbettverfahren hingegen empfiehlt es sich, bei leicht erhöhtem Druck zu arbeiten, wobei der Druck in einem Bereich von 1,01 bar bis 5 bar, bevorzugt 1,1 bis 1,5 bar gewählt wird.

Auch eine chemische Vorbehandlung des Trägermaterials mit einer Alkylverbindung wie Aluminiumalkyl AlR₃, Lithiumalkyl LiR oder einem Alumoxan der allgemeinen Formel VI a bis VI b ist möglich.

Für eine Polymerisation im Suspensionsverfahren werden solche Suspensionsmittel verwendet, in denen das gewünschte Polymer nicht oder nur in geringem Ausmaß löslich ist, weil andernfalls in den Anlagenteilen, in denen das Produkt vom Suspensionsmittel abgetrennt wird, Beläge des Produkts auftreten und zu wiederholten Abschaltungen und Reinigungsoperationen zwingt. Geeignete Suspensionsmittel sind gesättigte Kohlenwasserstoffe wie beispielsweise Propan, n-Butan, Isobutan, n-Pentan, Isopentan, n-Hexan, Isohexan und Cyclohexan, wobei Isobutan bevorzugt ist.

Druck- und Temperaturbedingungen während der Polymerisation können in weiten Grenzen gewählt werden. Als Druck hat sich ein Bereich von 0,5 bar bis 150 bar als geeignet erwiesen, bevorzugt sind 10 bis 75 bar. Als Temperatur hat sich ein Bereich von 0 bis 120°C als geeignet erwiesen, bevorzugt sind 40 bis 100°C und besorders bevorzugt 50 bis 85°C.

Als Monomer sind die folgenden Olefine geeignet: Ethylen, Propylen, 1-Buten, 1-Penten, 1-Hexen, 1-Octen, 1-Decen oder 1-Undecen.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere.

Die erfindungsgemäßen Katalysatoren haben sich weiterhin als Wasserstoff-regelbar erwiesen, d.h. durch Zugabe von Wasserstoff lässt sich das Molekulargewicht der durch die erfindungsgemäßen Katalysatoren erhältlichen Polymere senken. Bei genügend Wasserstoffzugabe werden Wachse erhalten, wobei die erforderliche Wasserstoffkonzentration auch von der Art der verwendeten Polymerisationsanlage abhängt. Weiterhin wird beobachtet, dass die Aktivität der erfindungsgemäßen Katalysatoren bei Wasserstoffzugabe steigt.

Die erfindungsgemäßen Katalysatoren können auch gemeinsam mit einem oder mehreren anderen, an sich bekannten Polymerisationskatalysator verwendet werden. So können sie zusammen mit
- Ziegler-Natta-Katalysatoren,
- geträgerten Metallocenkatalysatoren der Übergangsmetalle der Gruppen IV bis VI des Periodensystems der Elemente,
- Katalysatoren der späten Übergangsmetalle (WO 96/23010),
- Fe- oder Co-Komplexen mit Pyridyldiiminliganden, wie sie in WO 98/27124 offenbart werden,
- oder auch Chromoxidkatalysatoren nach Phillips eingesetzt werden.

Dabei ist es einerseits möglich, verschiedene Katalysatoren miteinander zu mischen und gemeinsam zu dosieren oder cogeträgerte Komplexe auf einem gemeinsamen Träger zu verwenden oder auch verschiedene Katalysatoren getrennt an derselben oder an verschiedener. Stellen in das Polymerisationsgefäß zu dosieren.

Arbeitsbeispiel:
1. Darstellung von 1,1'-Bis(*N*-phenyl-*N*-acetamido)ferrocen 0,25 g (1,8 mmol) *N*-Phenylacetamid wurden unter Argon in 30 ml absolutem Toluol mit 0,087 g (2,2 mmol) Natriumamid eine Stunde am Rückfluss erhitzt. Nach dem Erkalten wurde das Lösungsmittel am Hochvakuum abgezogen, der weiße Rückstand abermals in 30 ml Toluol gelöst und anschließend mit 0,3 g (2,1 mmol) Kupfer(I)bromid, 0,3 g (0,87 mmol) 1,1'-Dibromferrocen und 0,5 ml Pyridin (absolut) 72 Stunden am Rückfluss erhitzt. Das Toluol wurde am Rotationsverdampfer abgezogen, der Rückstand sorgfältig getrocknet und anschließend säulenchromatographisch gereinigt (Alox, Laufmittel Methylenchlorid/Acetonitril).
   Ausbeute: 0,271 g (0,60 mmol, 68%).
   Daten: gelbes Pulver, C₂₆H₂₄FeN₂O₂, M = 452.33 g/mol, m.p.: 124 °C. MS (EI): 452 (M⁺, 100%), 410 (M⁺ - CH₃O, 4%), 254 (M⁺ - CpNPhCOCH₃, 58%). IR (KBr): 3085w, 3069w, 1672s, 1593m, 1493s, 1464s, 1410w, 1368m, 1327m, 1314m, 1281w, 1225w, 1032m, 1014w, 852w, 806m, 771w, 764m, 700s, 636w, 600m, 526w, 478m, 457w cm⁻¹. ¹H-NMR (CDCl₃): 1.82 (6H, s, CH₃); 3.89 (4H, m, Cp_{subst}) ; 4.32 (4H, m, Cp_{subst}) ; 7.32-7.48 (10H, m, Phenyl). ¹³C-NMR (CDCl₃): 24.7 (CH₃); 63.2, 65.9, 102.2 (Ferrocen); 128.3, 128.8, 129.7, 142.5 (Phenyl); 169.6 (C=O).
2. Darstellung von 1,1'-Bis(phenylamino)ferrocen 0,248 g (0,55 mmol) 1,1'-Bis(phenylacetamido)ferrocen wurden unter Argon in 30 ml Argongesättigtem Ethanol (96%) mit 2 g (35,6 mmol) Kaliumhydroxid 16 Stunden am Rückfluss erhitzt. Nach dem Erkalten wurde die Reaktionsmischung (ohne Inertgas) mit 30 ml Argon-gesättigtem Wasser verdünnt, in einen Scheidetrichter transferiert und mehrmals mit Ether extrahiert. Die vereinigten Etherphasen wurden über Natriumsulfat getrocknet, filtriert und unter Argon am Hochvakuum eingeengt.
   Ausbeute: 0.147 g (0.40 mmol, 73%).
   Daten: gelbes luftempfindliches Pulver, C₂₂H₂₀FeN₂, M = 368.26 g/mol. ¹H-NMR (CDCl₃): 3.99 (4H, m, Cp_{subst}); 4.22 (4H, m, Cp_{subst}); 6.74-7.16 (10H, m, Phenyl). ¹³C-NMR (CDCl₃) : 62.6, 64.8, 99.6 (Ferrocen); 114.3, 118.4, 128.8, 145.7 (Phenyl).
3. Darstellung von 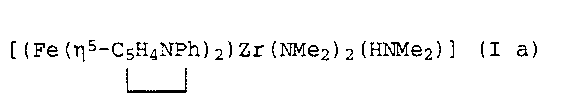 Zu 630,0 mg (2,35 mmol) Zr(NMe₂)₄ und 867,2 mg (2.35 mmol) 1,1'-Bis(phenylamino)-ferrocen werden 7 ml Benzol gegeben. Es fällt sofort ein hellgelber Feststoff aus der Reaktionslösung aus. Die Reaktionsmischung wird 1 h bei Raumtemperatur gerührt. Anschließend wird aus Benzol umkristallisiert. Man erhält 0.99 g (1.68 mmol, 71 %) I a als analysenreine gelbe Kristalle.
   _{δH}(CDCl₃, 298 K) 2.39 (br s, 6 H, HN*Me*₂), 3.05 (s, 12 H, N*Me*₂), 3.70 (t, 4 H, ³*J*_{HH}=1.9, cyclopentadienyl), 4.62 (t, 4 H, ³*J*_{HH}=1.9, cyclopentadienyl), 6.66 (t, ³*J*_{HH}=7.2, 2 H, *p*-aryl H), 6.74 (d, 4 H, ³*J*_{HH}= 7.8, o-aryl H), 7.17 (t, 4 H, ³*J*_{HH}=7.7, *m*-aryl H); _{δC}(CDCl₃, 298 K) 39.1, 43.2, 68.5, 70.5, 89.9, 115.3, 117.0, 129.1, 153.9
4. Darstellung von 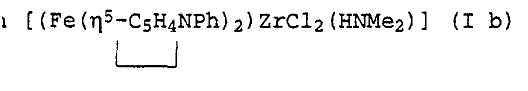 277,0 mg (0,47 mmol) Ia und 76,6 mg (0,94 mmol) HNMe₂·HCl werden mit 5 ml Benzol versetzt. Es entsteht eine klare orange Lösung. Die Reaktionslösung wird 15 h bei Raumtemperatur gerührt. Der resultierende gelbe Feststoff wird abfiltriert und aus Chloroform umkristallisiert. Man erhält 91,7 mg (0,16 mmol, 33 %) I b als analysenreinen gelben Feststoff.
   _{δC}(CDCl₃, 298 K) 40.4, 68.1, 70.9, 72.7, 73.8, 81.6, 116.2, 120.3, 128.9, 151.5
5. Polymerisationsbeispiel
   In einem 1-l-Stahlautoklaven der Fa. Büchi wurden 450 ml Toluol vorgelegt. Dazu wurde eine Mischung von 2 ml Methylaluminoxan (30 Gew.-% Lösung in Toluol, Fa. Witco) und 20 mg des Komplexes I a gegeben. Der Autoklav wurde auf 70°C temperiert und Ethylen bis zu einem Druck von 40 bar aufgepresst. Der Ethylendruck wurde durch automatisches Nachdosieren konstant gehalten. Nach 90 min. wurde die Polymerisation durch Entspannen des Autoklaven abgebrochen. Man isolierte 13,1 g Polyethylen als weißes Pulver, was einer Aktivität von 260 kg PE/mol·h entspricht. Die Polymerviskosität, bestimmt nach ISO 1628-3, betrug 0,3 dl/g.

## Patentansprüche

1. Metallorganische Verbindung der allgemeinen Formel I, 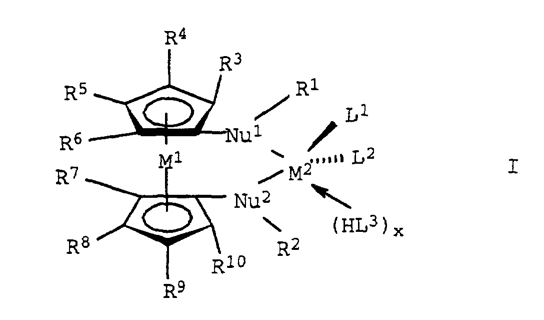 wobei die Variablen wie folgt definiert sind:
M¹ ausgewählt aus Fe, Co, Ru oder Os,
M² ein Übergangsmetall der Gruppen 4, 5 oder 6 des Periodensystems der Elemente,
Nu¹ und Nu² gleich oder verschieden und ausgewählt aus N, P oder As,
R¹ und R² gleich oder verschieden und ausgewählt aus
C₁-C₈-Alkyl, substituiert oder unsubstituiert,
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
R³ bis R¹⁰ Wasserstoff,
C₁-C₈-Alkyl, substituiert oder unsubstituiert,
C₃-C₁₂-Cycloalkyl, substituiert oder unsubstituiert,
NO₂,
Halogen,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
wobei jeweils zwei benachbarte Reste R³ bis R⁶ oder R⁷ bis R¹⁰ zusammen mit den C-Atomen des Stammaromaten einen 5- bis 8-gliedrigen Ring bilden können oder sterisch günstig stehende Reste eine Verbrückung der beiden C₅-Ringe bewirken können;
L¹ bis L³ sind gleich oder verschieden und ausgewählt aus
NR¹⁴R¹⁵, wobei R¹⁴ und R¹⁵ gleich oder verschieden sind und ausgewählt werden aus C₁-C₈-Alkyl, C₃-C₁₂-Cycloalkyl, C₂-C₈-Alkenyl mit einer oder mehreren konjugierten oder nicht-konjugierten Doppelbindungen, C₇-C₁₃-Aralkyl, C₆-C₁₄-Aryl, SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl; und wobei R¹⁴ und R¹⁵ miteinander unter Einbeziehung von N einen fünf- bis zehngliedrigen, gesättigten oder ungesättigten Ring bilden können, der seinerseits mit C₁-C₆-Alkyl substituiert sein kann,
Halogenid,
C₁-C₈-Alkyl, substituiert oder unsubstituiert,
C₃-C₁₂-Cycloalkyl,
C₇-C₁₃-Aralkyl,
C₆-C₁₄-Aryl,
C₁-C₆-Alkoxy;
C₆-C₁₄-Aryloxy,
x eine ganze Zahl von 0 bis 3 ist.

2. Metallorganische Verbindung der allgemeinen Formel I, in der Nu¹ und Nu² gleich N und R¹ und R² jeweils gleich aus unsubstituiertem oder einfach oder mehrfach gleich oder verschieden substituiertem C₆-C₁₄-Aryl oder fünf- bis sechsgliedrigen stickstoffhaltigen Heteroarylresten gewählt werden.

3. Verfahren zur Herstellung einer metallorganischen Verbindung der allgemeinen Formel I, **dadurch gekennzeichnet, dass** man eine metallorganische Verbindung der allgemeinen Formel II 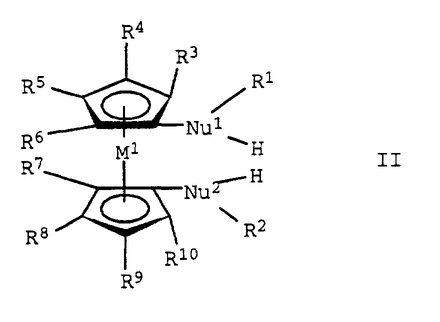 mit einer Übergangsmetallverbindung der allgemeinen Formel III
M²L¹L²(L³)ₓ₊₁ III
umsetzt, wobei die Variablen wie oben definiert sind.

4. Verfahren gemäß Anspruch 3, **dadurch gekennzeichnet, dass** man die metallorganische Verbindung der allgemeinen Formel II zunächst mit einer Base zweifach deprotoniert.

5. Metallorganische Verbindung der allgemeinen Formel II, wobei die Variablen wie folgt definiert sind: 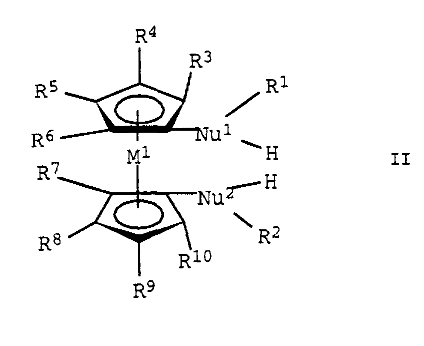
M¹ ausgewählt aus Fe, Co, Ru oder Os,
Nu¹ und Nu² gleich oder verschieden und ausgewählt aus N, P oder As,
R¹ und R² gleich oder verschieden und ausgewählt aus
C₁-C₈-Alkyl, substituiert oder unsubstituiert,
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
R³ bis R¹⁰ Wasserstoff,
C₁-C₈-Alkyl, substituiert oder unsubstituiert,
C₃-C₁₂-Cycloalkyl, substituiert oder unsubstituiert,
NO₂,
Halogen,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
wobei jeweils zwei benachbarte Reste R³ bis R⁶ oder R⁷ bis R¹⁰ zusammen mit den C-Atomen des Stammaromaten einen 5- bis 8-gliedrigen Ring bilden können oder sterisch günstig stehende Reste eine Verbrückung der beiden C₅-Ringe bewirken können;

6. Verfahren zur Herstellung einer metallorganischen Verbindung der allgemeinen Formel II, **dadurch gekennzeichnet, dass** man eine metallorganische Dicarbonylverbindung der allgemeinen Formel IV, 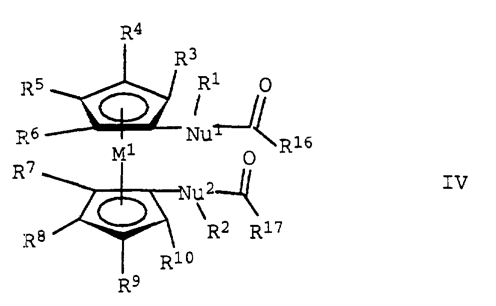 in der
R¹⁶ und R¹⁷ unabhängig voneinander ausgewählt werden aus
C₁-C₈-Alkyl,
C₃-C₁₂-Cycloalkyl,
C₇-C₁₃-Aralkyl,
C₆-C₁₄-Aryl
und die übrigen Variablen wie in Formel II definiert sind mit einer Hydroxidverbindung der allgemeinen Formel M³OH oder M⁴(OH)₂ umsetzt, wobei
M³ Li, Na, K, Rb oder Cs und
M⁴ Mg, Ca, Sr oder Ba bedeuten.

7. Verfahren gemäß Anspruch 6, **dadurch gekennzeichnet, dass** Nu 1 und Nu² jeweils N bedeuten und R¹⁶ und R¹⁷ gleich sind und Methyl oder Phenyl bedeuten.

8. Verfahren gemäß den Ansprüchen 7 und 8, **dadurch gekennzeichnet, dass** die Reaktion in siedendem Ethanol, n-Propanol oder n-Butanol durchgeführt wird.

9. Metallorganische Verbindung der allgemeinen Formel IV, 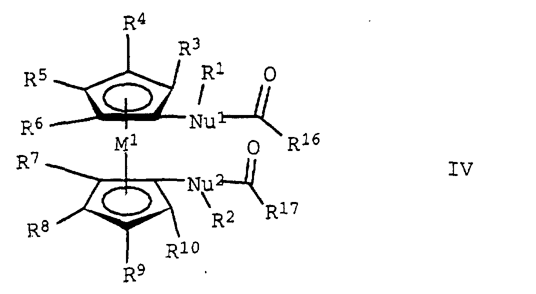 in der die Variablen wie folgt definiert sind:
M¹ ausgewählt aus Fe, Co, Ru oder Os,
Nu¹ und Nu² gleich oder verschieden und ausgewählt aus N, P oder As,
R¹ und R² gleich oder verschieden und ausgewählt aus
C₁-C₈-Alkyl, substituiert oder unsubstituiert,
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
R³ bis R¹⁰ Wasserstoff,
C₁-C₈-Alkyl, substituiert oder unsubstituiert, C₃-C₁₂-Cycloalkyl, substituiert oder unsubstituiert,
NO₂,
Halogen,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
wobei jeweils zwei benachbarte Reste R³ bis R⁶ oder R⁷ bis R¹⁰ zusammen mit den C-Atomen des Stammaromaten einen 5- bis 8-gliedrigen Ring bilden können oder sterisch günstig stehende Reste eine Verbrückung der beiden C₅-Ringe bewirken können,
R¹⁶ und R¹⁷ C₁-C₈-Alkyl,
C₃-C₁₂-Cycloalkyl,
C₇-C₁₃-Aralkyl,
C₆-C₁₄-Aryl.

10. Verfahren zur Herstellung einer metallorganischen Verbindung der allgemeinen Formel IV, **dadurch gekennzeichnet, dass** man ein oder zwei Carbonsäurederivate R¹⁶-CO-Nu¹R¹H und R¹⁷-CO-Nu²R²H deprotoniert, in denen die Variablen wie folgt definiert sind:
Nu¹ und Nu² gleich oder verschieden und ausgewählt aus N, P oder As,
R¹ und R² gleich oder verschieden und ausgewählt aus
C₁-C₈-Alkyl, substituiert oder unsubstituiert,
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
R¹⁶ und R¹⁷ C₁-C₈-Alkyl,
C₃-C₁₂-Cycloalkyl,
C₇-C₁₃-Aralkyl,
C₆-C₁₄-Aryl,
und dann mit einer metallorganischen Verbindung der allgemeinen Formel V 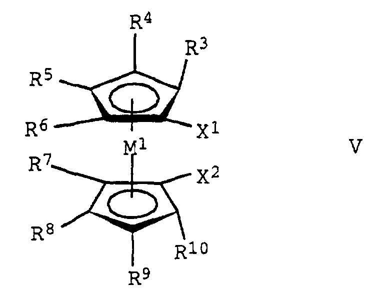 in Gegenwart einer Kupfer(I)-Verbindung und eines Cosolvens umsetzt, in der die Variablen wie folgt definiert sind:
M¹ ausgewählt aus Fe, Co, Ru oder Os,
X¹ und X² unabhängig voneinander F, Cl oder Br,
R³ bis R¹⁰ Wasserstoff,
C₁-C₈-Alkyl, substituiert oder unsubstituiert,
C₃-C₁₂-Cycloalkyl, substituiert oder unsubstituiert,
NO₂,
Halogen,
C₇-C₁₃-Aralkyl,
C₆-C₁₄-Aryl, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
fünf- bis sechsgliedrigen stickstoffhaltigen Heteroarylresten, unsubstituiert oder einfach oder mehrfach gleich oder verschieden substituiert mit
C₁-C₈-Alkyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR¹¹R¹²R¹³ oder O-SiR¹¹R¹²R¹³, wobei R¹¹-R¹³ ausgewählt werden aus C₁-C₈-Alkyl, C₃-C₁₂-Cycloalkyl, C₇-C₁₃-Aralkyl oder C₆-C₁₄-Aryl;
wobei jeweils zwei benachbarte Reste R³ bis R⁶ oder R⁷ bis R¹⁰ zusammen mit den C-Atomen des Stammaromaten einen 5- bis 8-gliedrigen Ring bilden können oder sterisch günstig stehende Reste eine Verbrückung der beiden C₅-Ringe bewirken können.

11. Verfahren gemäß Anspruch 10, **dadurch gekennzeichnet, dass** man als Cosolvens Pyridin verwendet.

12. Katalysatorsystem zur Polymerisation oder Copolymerisation von Olefinen, enthaltend eine oder mehrere metallorganische Verbindungen der allgemeinen Formel I gemäß den Ansprüchen 1 oder 2 und mindestens einen Aktivator.

13. Verfahren zur Polymerisation oder Copolymerisation von Olefinen unter Verwendung eines Katalysatorsystems gemäß Anspruch 12.

14. Fester Katalysator zur Polymerisation oder Copolymerisation von Olefinen, enthaltend eine oder mehrere metallorganische Verbindungen gemäß Anspruch 1, mindestens einen Aktivator und einen festen Träger.

15. Verfahren zur Herstellung eines festen Katalysators gemäß Anspruch 14 durch Imprägnieren eines Trägermaterials mit einer oder mehreren metallorganischen Verbindungen gemäß Anspruch 1 und mindestens einem Aktivator.

16. Verfahren zur Polymerisation oder Copolymerisation von Olefinen in Masse, in Suspension oder in der Gasphase unter Verwendung eines Katalysators gemäß Anspruch 14.
